# EUROPEAN PATENT SPECIFICATION

(11) **EP 2 842 798 B1**
(45) Date of publication and mention of the grant of the patent: **05.07.2017**
(21) Application number: 14181286.7
(22) Date of filing: 18.08.2014
(51) Int. Cl.: B60N 2/00, B60N 2/56

(54) **Vehicle seat occupant sensor and heater element**
Fahrzeugsitzinsassensensor und Heizelement
Capteur d'occupant de siège de véhicule et élément de chauffage

(30) Priority: 26.08.2013 US 201313975608
(43) Date of publication of application: 04.03.2015
(73) Proprietor: Delphi Technologies, Inc., Troy MI 48007 (US)
(72) Inventor: Fortune, Duane D., Lebanon, IN 46052 (US); Constable, Robert K., Kokomo, IN 46902 (US); Champion, Douglas R., Kokomo, IN 46902 (US)
(74) Representative: Delphi France SAS

(56) References cited:
- WO-A1-2011/154469
- US-A1- 2008 018 143

## Description

### TECHNICAL FIELD OF INVENTION

This disclosure generally relates to a combination seat occupant sensor and seat heater element for use in a vehicle seat.

### BACKGROUND OF INVENTION

Known occupant sensing systems use an occupant sensor or antenna configured to capacitively detect an occupant in the vehicle seat as part of an airbag enablement/suppression system. The system classifies a seat occupant as an adult occupant or a child/child safety seat in accordance with U.S. Federal Motor Vehicle Safety Standard FMVSS-208. In vehicle seats equipped with seat heaters, the occupant sensor is typically a sensor electrode distinct from the heater element that is assembled to the top of the heater element. However, variable capacitive coupling between the sensor electrode and the heater element causes undesirable variability when determining occupant presence. It has been proposed to place a shield electrode between the sensor electrode and the heater element to form an electronic guard element that reduces this variability. However, adding this guard element undesirably increase the cost and complexity of the system.

Document US2008/0018143A1 discloses an occupant sensor mat according to the preamble of claim 1 and a vehicle seat assembly according to the preamble of claim 4.

### SUMMARY OF THE INVENTION

In accordance with the invention, an occupant sensor mat according to claim 1 and a vehicle seat assembly according to claim 4 are provided.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a schematic of an occupant detection system in accordance with one embodiment; and
Fig. 2 is sectional side view of a mat used by the system of Fig. 1 in accordance with one embodiment.

### DETAILED DESCRIPTION

Section 19 of the U.S. Federal Motor Vehicle Safety Standard FMVSS-208 requires certain vehicles to inhibit deployment of supplemental inflatable restraints (air bags) if an occupant of the seat protected by the air bag is smaller than a 5^{th} percentile female, i.e. - is a person weighing about 46 kilograms (102 pounds). This may be achieved with the use of a seat occupant sensor that detects the size of a seat occupant. Without subscribing to any particular theory of operation, the occupant sensor is connected to an electronic controller that determines the capacitance between the occupant sensor and the vehicle's electrical ground. When an occupant sits on the seat containing the seat occupant sensor and heater element, the occupant sensor is capacitively coupled to ground through the occupant. The heater element may also be at ground potential, so the occupant sensor may also be capacitively coupled to ground through the heater element. Physical separation between the heater element and occupant sensor by a spacer influences capacitive coupling between the occupant sensor and the heater element. When an occupant sits in the vehicle seat and the spacer is compressible, the distance between the occupant sensor and the heater element is reduced, thereby increasing the capacitive coupling between the two. This increase in capacitive coupling is in addition to the capacitive coupling between the occupant sensor and the seat occupant, so the capacitive coupling attributed to the occupant may be masked by the capacitive coupling attributed to the heater element.

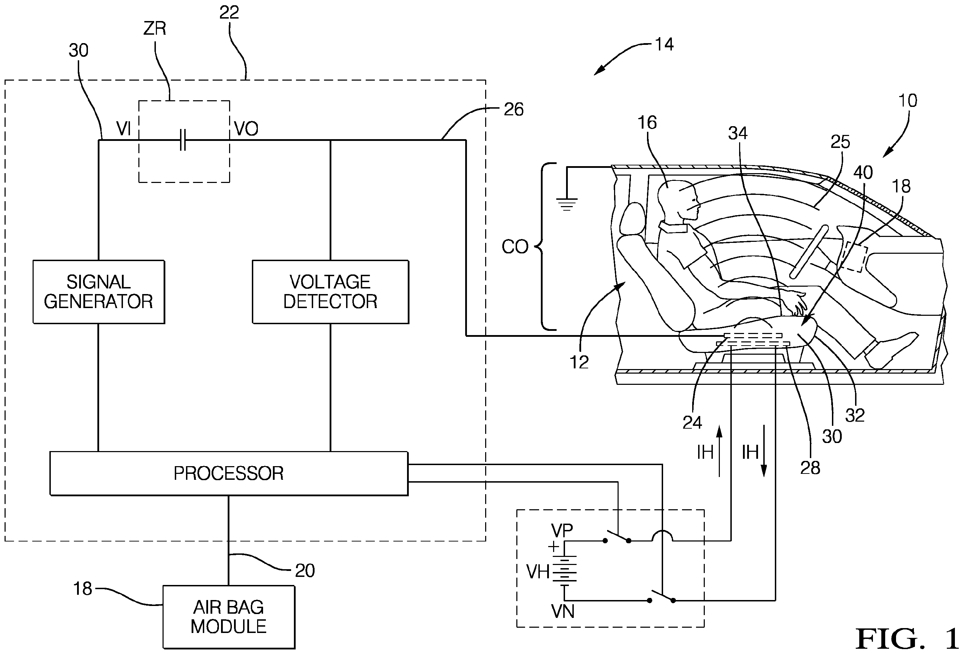

Fig. 1 illustrates a non-limiting embodiment a vehicle 10 that includes a seat assembly 12 and an occupant detection system 14 for determining an occupant 16 residing on or proximate to the seat assembly 12. As used herein, characterizing an occupant or object being proximate to a seat means that the occupant may be residing upon the seat in a number of orientations including, but not limited to, sitting facing forward and leaning back against a backrest, sitting facing forward and leaning forward away from the back rest, sitting facing sideways, sitting on the edge of the seat, sitting in an infant car seat that is secured to the seat with a seat belt or other means. Furthermore, as used herein, 'determining an occupant proximate to a vehicle seat' or 'determining an occupant' means not only detecting a presence of an occupant, but may also include making a determination about a characteristic of the occupant such as, but not limited to, size, weight, or if the occupant is residing in an infant seat or a child booster seat. It will be appreciated that the occupant detection system 14 may be used in any kind of vehicle, such as an airplane, construction equipment, or an automobile. As used herein, determining the occupant 16 may include detecting the presence of an occupant such as an adult as illustrated which may be useful when checking to determine if the seat belt should be fastened, or activating a warning if the seat belt is not properly deployed. Determining an occupant may also include characterizing the occupant (e.g., adult versus infant) which may be useful for enabling or disabling the air bag module 18 or other passenger protection devices in the vehicle 10. It is advantageous to disable the air bag module 18 if the vehicle seat is empty or occupied by an infant in a child seat so the air bag is not unnecessarily deployed. The air bag module 18 may receive an activation signal 20 from a controller 22 to arm the air bag module 18 so that a signal from a collision detection system (not shown) can deploy the air bag when necessary. The controller 22 may include a processor such as a microprocessor or other control circuitry as should be evident to those in the art. The controller 22 may include memory, including non-volatile memory, such as electrically erasable programmable read-only memory (EEPROM) for storing one or more routines, thresholds and captured data. The one or more routines may be executed by the processor to perform steps for determining if signals received by the controller 22 for determining an occupant as described herein.

Fig. 1 further illustrates that the system 14 that includes of an occupant detection electrode or sensor electrode 24 electrically coupled to the controller 22 for determining an occupant presence. The sensor electrode 24 may be arranged proximate to or adjacent to an expected location of the occupant 16, such as a seating surface 34 of the seat assembly 12 for determining the occupant 16. The sensor electrode 24 may be formed of a variety of electrically conductive materials such as metal wire, conductive fiber, conductive ink, metal foil, or metal ribbon. The controller 22 may be configured to output an excitation signal 26 to the sensor electrode 24 to generate an electric field 25 that impinges on the occupant 16. In one non-limiting example, the excitation signal 26 may arise from an input signal VI passing through a reference voltage ZR to generate an output signal VO that is output by the controller 22 as the excitation signal 26. While not subscribing to any particularly theory, it has been observed that the presence of the occupant 16 influences characteristics the excitation signal 26, such as amplitude and phase, in accordance with various aspects of the occupant 16, such as the presence of the occupant proximate to the seat assembly 12, or the size of the occupant occupying the seat assembly 12. As such, the sensor electrode 24 may be particularly configured so the occupant 16 readily influences the excitation signal 26 in accordance with an occupant presence proximate to the seat assembly 12 for determining the occupant 16. It has also been observed that by positioning the sensor electrode 24 closer to the seating surface 34 occupied by the occupant 16, the accuracy, and sensitivity of the occupant detection system 14 for determining and occupant 16 is improved.

The system may also include a heater element 28 configured to generate heat in response to a heater voltage source VH for warming the occupant 16. The heater element 28 may be formed of electrically conductive material that exhibits an electrical resistance so that when the heater voltage source VH is applied to the heater element 28, a heater current IH is generated that flows through the heater element 28 to generate heat. The heater voltage source VH is illustrated in Fig. 1 as a separate battery, but it is understood that the heater voltage source VH would typically be provided by the vehicle electrical system that normally includes a battery such as a rechargeable lead-acid battery commonly found in automobiles. In an operating automobile, a typical voltage value for the heater voltage is about 12 Volts to about 15 Volts, and a suitable resistance value for the heater element 28 is about 3 Ohms. It will be appreciated that locating the heater element 28 closer the seating surface occupied by the occupant 16 will improve the thermal efficiency of the heater element 28 for warming the occupant 16.

A typical seat assembly 12 may include a cushion 30 that typically is formed of foam and shaped to be comfortable to sit upon. The cushion 30 may be covered with a seat cover 32 that may be formed of fabric or leather to make the seat assembly 12 attractive. As suggested above, it may be preferably for the sensor electrode 24 and the heater element 28 to both be located as close to the occupant 16 as possible. For example, the sensor electrode 24 and the heater element 28 may be positioned between the cushion 30 and the seat cover 32. In one embodiment the sensor electrode 24 is arranged within the seat assembly 12 proximate to a seating surface, and the heater element 28 is arranged proximate to the sensor electrode 24 opposite the seating surface; that is below the sensor electrode 24. For this embodiment, and other embodiments having the sensor electrode 24 and the heater element 28 in close proximity to each other, it has been observed that the presence or absence of the heater element 28 may affect or interfere with the accuracy of determining the occupant 16.

In one embodiment of the system 14, the heater element 28 may be formed of a length of electrically conductive material. Alternately, the heater element may be in the form of a sheet or ribbon of conductive material with contacts generally located at opposite sides of the sheet or ribbon so that current passing through the heater element 28 is effective to generate heat over an area of the sheet or ribbon. The system 14 may further comprise a heater voltage source VH source having a first voltage output VP and a second voltage output VN. The heater voltage source VH is shown separate from the controller 22; however it will be appreciated that the heater voltage source VH could be incorporated within the controller 22. When the heater voltage source VH is electrically connected to the heater element 28, the first voltage output VP and the second voltage output VN cooperate to supply a heater current to warm the heater element. For example, the first voltage output VP may have a first voltage value that is greater than a second voltage value of the second voltage output VN such that a heater current IH is supplied to the heater element 28 as illustrated in Fig. 1.

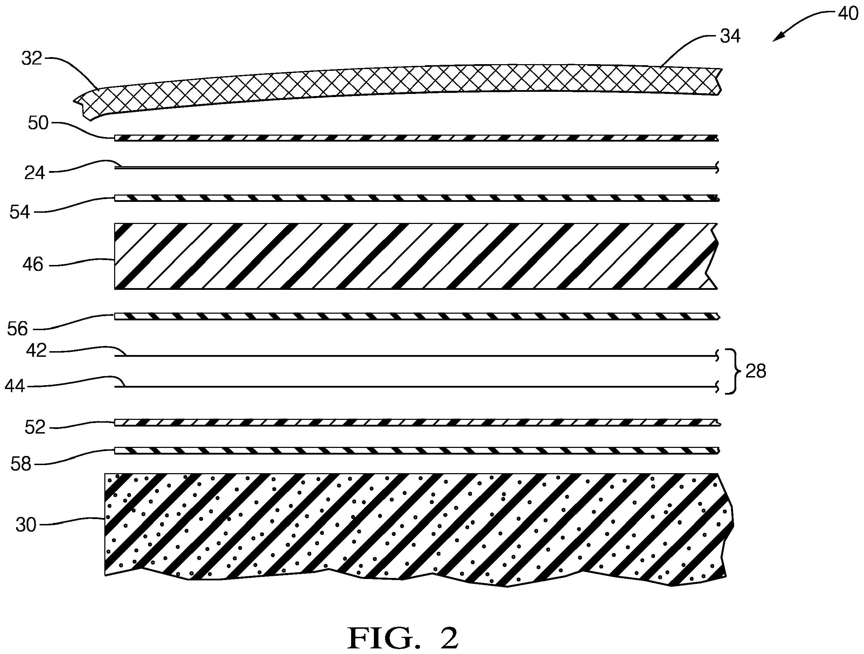

Fig. 2 illustrates a non-limiting example of an occupant sensor mat 40 configured to be located proximate to the seating surface 34 of the vehicle seat assembly, (the seat assembly 12). The mat 40 includes the sensor electrode 24 which is generally formed of conductive material as described above. The sensor electrode 24 is configured to radiate the electric field 25 (Fig. 1) in response to the excitation signal 26 for determining an occupant presence of the occupant 16 when proximate to the seating surface 34.

The mat 40 also includes a heater element 28 configured to preferably underlie the sensor electrode 24. In this non-limiting example, the heater element formed of two layers of conductive material, a silver ink layer 42, and a carbon positive-temperature-coefficient (PTC) layer 44. In general, the heater element 28 is configured to radiate heat in response to electrical current IH for warming an occupant 16 residing on the seating surface 34. The combination of the silver link layer and the PTC layer 44 provides a heater element 28 that is self-regulating with regard to the temperature of heater element 28 so that a wide range of voltage source VH can be accommodated.

The mat 40 also includes an incompressible spacer 46 interposed between the sensor electrode 24 and the heater element 28. The incompressible spacer 46 is preferably formed of a material sufficiently flexible so that it is not noticeable or uncomfortable for the occupant 16 to sit on, and so is suitable for locating proximate to the seating surface 34. The incompressible spacer 46 is also preferably sufficiently incompressible to prevent a substantial change in capacitive coupling between the sensor electrode 24 and the heater element 28 from before to while an occupant 16 resides on the seating surface 34. If the incompressible spacer 46 was too compressible (i.e. soft), the difference in capacitive coupling between the sensor electrode 24 and the heater element 28 varied greatly from when the seat assembly 12 was empty (i.e. unoccupied) to when the seat assembly 12 was occupied by a child or small adult, it may cause uncertainty or inaccuracy when the system 14 determines if the air bag module 18 should be enabled or disabled.

The following is a non-limiting numerical example that may help to clarify any misunderstanding of the description above. When the seat assembly 12 is unoccupied, the capacitive coupling between the sensor electrode 24 and the heater element 28 may be, for example, ten pico-Farads (10pF), and the capacitive coupling between the sensor electrode 24 and the vehicle 10 may be, for example, one pico-Farad (1pF). If the spacer is relatively soft (compressible) a small occupant residing on the seat may cause the capacitive coupling between the sensor electrode 24 and the heater element 28 to increase to, for example, twenty pico-Farads (20pF), and the coupling between the sensor electrode 24 and the vehicle 10 to increase to, for example, five pico-Farads (5pF). It should be clear that the four pico-Farad (4pF) change due to the occupant would be difficult to distinguish from the 20pF load presented by the heater element 28.

The mat 40 set forth herein has the incompressible spacer 46 that is configured so there is not a substantial change in the capacitive load presented by the heater element 28. Prototype testing using an eight-hundred micrometer (800um or 0.8mm) thick layer of Muller Textile Group 3mesh material number T5754-0300-1400-0001 indicates that the change in capacitive coupling between the sensor electrode 24 and the heater element 28 is limited to about two pico-Farads (2pF) for a wide range of occupant sizes. It is recognized that using a thicker layer would be advantageous for further reducing capacitive coupling between the sensor electrode 24 and the heater element 28. However, making the incompressible spacer 46 thicker may undesirably reduce thermal coupling between the heater element 28 and the seating surface 34. As such, the material selected to form the incompressible spacer 46 is preferably flexible to maintain comfort, incompressible to minimize capacitive coupling variability, and thermally conductive. It is recognized that the thermal conductivity aspect may be improved by selecting a material that is porous. By using a material for the incompressible spacer 46 that is not substantially compressed when subjected to the pressures resulting from an occupant residing on the seating surface, the contribution of capacitive coupling between the sensor electrode 24 and the vehicle 10 attributable to the presence of the occupant 16 is more readily determined.

Prior proposed solutions to address the varying capacitive coupling between the sensor electrode 24 and the heater element 28 included adding a shield electrode or guard electrode. However, the mat 40 described herein does not include a shield electrode interposed between the sensor electrode and the heater element, and so is less costly to manufacturer, and more reliable as the number of parts forming the system 14 is reduced.

As suggested above, prototype testing of materials that would not cause a comfort problem, but still prevent varying capacitive coupling between the sensor electrode 24 and the heater element 28, needed to be thicker than about eight-hundred micrometers (800um, 0.8mm).

In order for a material to be considered as suitable, a design guideline was established that suggests a suitable material for the incompressible spacer 46 should not exceed a forty percent (40%) compression deflection value when an occupant residing on the seating surface applies a pressure of twenty-nine kilopascals (29kPa).

The mat 40 may also include various layer of polyester to form substrates 50, 52 for attaching the sensor electrode 24 and/or the heater element 28, using for example adhesive 54, 56, 58, such as acrylic adhesive, as will be recognize by those in the art. The mat 40 may also include other layers not show such as cloth covering layer to help improve the durability of the mat 40.

Accordingly, an occupant sensor mat (the mat 40) and a seat assembly 12 suitable detecting an occupant presence is provided. The incompressible spacer 46 described herein refers to a spacer material that may in fact be compressible, but relative to the seat loading events arising from the occupant 16 sitting in the seat assembly 12, the system 14 is able to differentiate between air-bag inhibit or allow conditions for controlling the airbag module 18. In other words, for an expected range of occupant sizes, the amount of spacer compression is minimal. The specification for the compressibility of a spacer material, whether it be a foam, woven cloth, or solid polymer such as urethane, is an industry standard in terms of the amount of pressure required for the material to collapse by a specific percentage of its overall thickness. This pressure is referred to as "compression deflection" and is typically put in terms of the amount of pressure to collapse the material by 25%, 40%, 50% or 65% (depending on if it is an ASTM or DIN standard). Testing of the incompressible spacer 46 in the system 14 with a non-shielded sensor (i.e. - the mat 40 does not include a shield) has shown that satisfactory system performance is expected if the spacer material has less than 40% compression deflection with a load of 29kPa. This compares to a 7.6kPa (1.1 psi) 40% compression deflection value for prior art collapsible spacers that require a shield for the system 14 to perform acceptable.

While this invention has been described in terms of the preferred embodiments thereof, it is not intended to be so limited, but rather only to the extent set forth in the claims that follow.

## Claims

1. An occupant sensor mat (40) configured to be located proximate to a seating surface (34) of a vehicle seat assembly (12), said mat (40) comprising:
a sensor electrode (24) formed of conductive material and configured to radiate an electric field (25) in response to an excitation signal (26) for determining an occupant (16) presence proximate to the seating surface (34);
a heater element (28) configured to underlie the sensor electrode (24), said heater element (28) formed of conductive material and configured to radiate heat in response to electrical current for warming an occupant (16) residing on the seating surface (34); and
an incompressible spacer (46) interposed between the sensor electrode (24) and the heater element (28), said incompressible spacer (46) formed of a material sufficiently flexible for locating proximate to a seating surface (34), and sufficiently incompressible to prevent a substantial change in capacitive coupling between the sensor electrode (24) and the heater element (28) from before to while an occupant (16) resides on the seating surface (34), **characterised in that** the incompressible spacer (46) exhibits less than a forty percent (40%) compression deflection value when an occupant (16) residing on the seating surface (34) applies a pressure of twenty-nine kilopascals (29kPa).

2. The mat (40) in accordance with claim 1, wherein the mat (40) does not include a shield electrode interposed between the sensor electrode (24) and the heater element (28).

3. The mat (40) in accordance with claim 1 or 2, wherein the incompressible spacer (46) has a thickness greater than eight-hundred micrometers (800um).

4. A vehicle seat assembly (12), said seat assembly (12) comprising:
a seat cushion (30) configured to define a seating surface (34);
a sensor electrode (24) located proximate to the seating surface (34), said sensor electrode (24) formed of conductive material and configured to radiate an electric field (25) in response to an excitation signal (26) for determining an occupant (16) presence proximate to the seating surface (34);
a heater element (28) underlying the sensor electrode (24) proximate to the seating surface (34), said heater element (28) formed of conductive material and configured to radiate heat in response to electrical current for warming an occupant (16) residing on the seating surface (34); and
an incompressible spacer (46) interposed between the sensor electrode (24) and the heater element (28), said incompressible spacer (46) formed of a material sufficiently flexible for locating proximate to a seating surface (34), and sufficiently incompressible to prevent a substantial change in capacitive coupling between the sensor electrode (24) and the heater element (28) from before to while an occupant (16) resides on the seating surface (34) **characterised in that** the incompressible spacer (46) exhibits less than a forty percent (40%) compression deflection value when an occupant (16) residing on the seating surface (34) applies a pressure of twenty-nine kilopascals (29kPa).

5. The seat assembly (12) in accordance with claim 5, wherein the seat assembly (12) does not include a shield electrode interposed between the sensor electrode (24) and the heater element (28).

6. The seat assembly (12) in accordance with claim 5 or 6, wherein the incompressible spacer (46) has a thickness greater than eight-hundred micrometers (800um).

## Patentansprüche

1. Eine Insassensensormatte (40), die konfiguriert ist, sich in der Nähe einer Sitzfläche (34) einer Fahrzeugsitzanordnung (12) zu befinden, wobei die Matte (40) aufweist:
eine Sensorelektrode (24), die aus leitendem Material gebildet ist und konfiguriert ist zum Ausstrahlen eines elektrischen Felds (25) in Reaktion auf ein Erregungssignal (26) zum Bestimmen einer Präsenz eines Insassen (16) in der Nähe der Sitzfläche (34);
ein Heizelement (28), das konfiguriert ist, unter der Sensorelektrode (24) zu liegen, wobei das Heizelement (28) aus leitendem Material gebildet ist und konfiguriert ist zum Ausstrahlen von Wärme in Reaktion auf einen elektrischen Strom zum Wärmen eines Insassen (16), der auf der Sitzfläche (34) sitzt; und
einen inkompressiblen Abstandshalter (46), der zwischen der Sensorelektrode (24) und dem Heizelement (28) angeordnet ist, wobei der inkompressible Abstandshalter (46) aus einem Material gebildet ist, das ausreichend flexibel ist, um nahe einer Sitzfläche (34) positioniert zu werden, und ausreichend inkompressibel ist zum Verhindern einer wesentlichen Änderung einer kapazitiven Kopplung zwischen der Sensorelektrode (24) und dem Heizelement (28) von davor bis während ein Insasse (16) auf der Sitzfläche (34) sitzt, **dadurch gekennzeichnet, dass**
der inkompressible Abstandshalter (46) einen Kompressionsablenkungswert von weniger als vierzig Prozent (40%) zeigt, wenn ein Insasse (16), der auf der Sitzfläche (34) sitzt, einen Druck von neunundzwanzig Kilopascal (29kPa) anwendet.

2. Die Matte (40) gemäß Anspruch 1, wobei die Matte (40) keine Abschirmelektrode zwischen der Sensorelektrode (24) und dem Heizelement (28) aufweist.

3. Die Matte (40) gemäß Anspruch 1 oder 2, wobei der inkompressible Abstandshalter (46) eine Dicke von mehr als achthundert Mikrometer (800um) hat.

4. Eine Fahrzeugsitzanordnung (12), wobei die Sitzanordnung (12) aufweist:
ein Sitzkissen (30), das konfiguriert ist zum Definieren einer Sitzfläche (34); eine Sensorelektrode (24), die sich in der Nähe der Sitzfläche (34) befindet, wobei die Sensorelektrode (24) aus leitendem Material gebildet ist und konfiguriert ist zum Ausstrahlen eines elektrischen Felds (25) in Reaktion auf ein Erregungssignal (26) zum Bestimmen einer Präsenz eines Insassen (16) in der Nähe der Sitzfläche (34);
ein Heizelement (28), das unter der Sensorelektrode (24) in der Nähe der Sitzfläche (34) liegt, wobei das Heizelement (28) aus leitendem Material gebildet ist und konfiguriert ist zum Ausstrahlen von Wärme in Reaktion auf einen elektrischen Strom zum Wärmen eines Insassen (16), der auf der Sitzfläche (34) sitzt; und
einen inkompressiblen Abstandshalter (46), der zwischen der Sensorelektrode (24) und dem Heizelement (28) angeordnet ist, wobei der inkompressible Abstandshalter (46) aus einem Material gebildet ist, das ausreichend flexibel ist, um nahe einer Sitzfläche (34) positioniert zu werden, und ausreichend inkompressibel ist zum Verhindern einer wesentlichen Änderung einer kapazitiven Kopplung zwischen der Sensorelektrode (24) und dem Heizelement (28) von davor bis während ein Insasse (16) auf der Sitzfläche (34) sitzt, **dadurch gekennzeichnet, dass**
der inkompressible Abstandshalter (46) einen Kompressionsablenkungswert von weniger als vierzig Prozent (40%) zeigt, wenn ein Insasse (16), der auf der Sitzfläche (34) sitzt, einen Druck von neunundzwanzig Kilopascal (29kPa) anwendet.

5. Die Sitzanordnung (12) gemäß Anspruch 5, wobei die Sitzanordnung (12) keine Abschirmelektrode zwischen der Sensorelektrode (24) und dem Heizelement (28) umfasst.

6. Die Sitzanordnung (12) gemäß Anspruch 5 oder 6, wobei der inkompressible Abstandshalter (46) eine Dicke von mehr als achthundert Mikrometer (800um) hat.

## Revendications

1. Tapis de détection d'occupant (40) configuré pour être placé à proximité d'une surface d'assise (34) d'un ensemble formant siège de véhicule (12), ledit tapis (40) comprenant :
une électrode détectrice (24) formée de matériau conducteur et configurée pour rayonner un champ électrique (25) en réponse à un signal d'excitation (26) pour déterminer la présence d'un occupant (16) à proximité de la surface d'assise (34) ;
un élément chauffant (28) configuré pour être placé au-dessous de l'électrode détectrice (24), ledit élément chauffant (28) étant formé d'un matériau conducteur et configuré pour rayonner de la chaleur en réponse à un courant électrique pour réchauffer un occupant (16) qui repose sur la surface d'assise (34) ; et
un élément d'écartement incompressible (46) interposé entre l'électrode détectrice (24) et l'élément chauffant (28), ledit élément d'écartement incompressible (46) étant formé d'un matériau suffisamment flexible pour être placé à proximité d'une surface d'assise (34), et suffisamment incompressible pour empêcher un changement substantiel du couplage capacitif entre l'électrode détectrice (24) et l'élément chauffant (28) depuis un moment avant jusqu'à un moment auquel un occupant (16) repose sur la surface d'assise (34),
**caractérisé en ce que** l'élément d'écartement incompressible (46) présente une valeur de déflexion sous compression inférieure à 40 % quand un occupant (16) qui repose sur la surface d'assise (34) applique une pression de 29 kPa.

2. Tapis (40) selon la revendication 1, dans lequel le tapis (40) n'inclut pas d'électrode écran interposée entre l'électrode détectrice (24) et l'élément chauffant (28).

3. Tapis (40) selon la revendication 1 ou 2, dans lequel l'élément d'écartement incompressible (46) a une épaisseur supérieure à 800 µm.

4. Ensemble formant siège de véhicule (12), ledit ensemble formant siège (12) comprenant :
un coussin de siège (30) configuré pour définir une surface d'assise (34) ;
une électrode détectrice (24) placée à proximité de la surface d'assise (34), ladite électrode détectrice (24) étant formée d'un matériau conducteur et configurée pour rayonner un champ électrique (25) en réponse à un signal d'excitation (26) pour déterminer la présence d'un occupant (16) à proximité de la surface d'assise (34) ;
un élément chauffant (28) placé au-dessous de l'électrode détectrice (24) à proximité de la surface d'assise (34), ledit élément chauffant (28) étant formé de matériau conducteur et configuré pour rayonner de la chaleur en réponse à un courant électrique pour réchauffer un occupant (16) qui repose sur la surface d'assise (34) ; et
un élément d'écartement incompressible (46) interposé entre l'électrode détectrice (24) et l'élément chauffant (28), ledit élément d'écartement incompressible (46) étant formé d'un matériau suffisamment flexible pour être placé à proximité d'une surface d'assise (34), et suffisamment incompressible pour empêcher un changement substantiel du couplage capacitif entre l'électrode détectrice (24) et élément chauffant (28) depuis un moment avant jusqu'à un moment auquel un occupant (16) repose sur la surface d'assise (34),
**caractérisé en ce que** l'élément d'écartement incompressible (46) présente une valeur de déflexion sous compression inférieure à 40 % quand un occupant (16) qui repose sur la surface d'assise (34) applique une pression de 29 kPa.

5. Ensemble formant siège (12) selon la revendication 4, dans lequel l'ensemble formant siège (12) n'inclut pas d'électrode écran interposée entre l'électrode détectrice (24) et élément chauffant (28).

6. Ensemble formant siège (12) selon la revendication 5 ou 6, dans lequel l'élément d'écartement incompressible (46) a une épaisseur supérieure à 800 µm.
